(19) **Europäisches Patentamt**

**European Patent Office**

**Office européen des brevets**

(11) **EP 1 188 260 B1**

(12) **EUROPEAN PATENT SPECIFICATION**

(45) Date of publication and mention
of the grant of the patent:
**14.07.2004 Bulletin 2004/29**

(51) Int Cl.⁷: **H04B 7/26**

(86) International application number:
**PCT/US2000/014339**

(21) Application number: **00937742.5**

(22) Date of filing: **24.05.2000**

(87) International publication number:
**WO 2000/074276 (07.12.2000 Gazette 2000/49)**

(54) **CELL SEARCH PROCEDURE FOR TIME DIVISION DUPLEX COMMUNICATION SYSTEMS USING CODE DIVISION MULTIPLE ACCESS**

VERFAHREN ZUR ZELLENSUCHE IN TDD/CDMA-NACHRICHTENÜBERTRAGUNGSSYSTEMEN

PROCEDURE DE RECHERCHE EN CELLULE POUR SYSTEMES DUPLEX A REPARTITION DANS LE TEMPS UTILISANT UN ACCES MULTIPLE PAR REPARTITION DE CODE

(84) Designated Contracting States:
**AT BE CH CY DE DK ES FI FR GB GR IE IT LI LU MC NL PT SE**

(30) Priority: **28.05.1999 US 136664 P**

(43) Date of publication of application:
**20.03.2002 Bulletin 2002/12**

(60) Divisional application:
**04008295.0**

(73) Proprietor: **INTERDIGITAL TECHNOLOGY CORPORATION**
**Wilmington, DE 19801 (US)**

(72) Inventors:
• **SEZGIN, Nadir**
**Jackson Heights, NY 11372 (US)**
• **OZLUTURK, Fatih**
**Port Washington, NY 11050 (US)**

(74) Representative: **Henningsson, Gunnar et al**
**AWAPATENT AB,**
**Box 45086**
**104 30 Stockholm (SE)**

(56) References cited:
**WO-A-99/12273**

• **EUROPEAN TELECOMMUNICATIONS STANDARD INSTITUTE (ETSI): "Universal Mobile Telcommunications System (UMTS);UMTS Terrestrial Radio Access (UTRA); Concept evaluation (UMTS 30.06 version 3.0.0)" TR 101146 V3.0.0, December 1997 (1997-12), XP002131073**
• **HIGUCHI K ET AL: "FAST CELL SEARCH ALGORITHM IN DS-CDMA MOBILE RADIO USING LONG SPREADING CODES" IEEE VEHICULAR TECHNOLOGY CONFERENCE,US,NEW YORK, IEEE, vol. CONF. 47, 4 May 1997 (1997-05-04), pages 1430-1434, XP000738598 ISBN: 0-7803-3660-7**

**Description**

BACKGROUND

This invention generally relates to spread spectrum Time Division Duplex (TDD) communication systems using Code Division Multiple Access (CDMA). More particularly, the present invention relates to cell search procedure of User Equipment (UE) within TDD/CDMA communication systems.

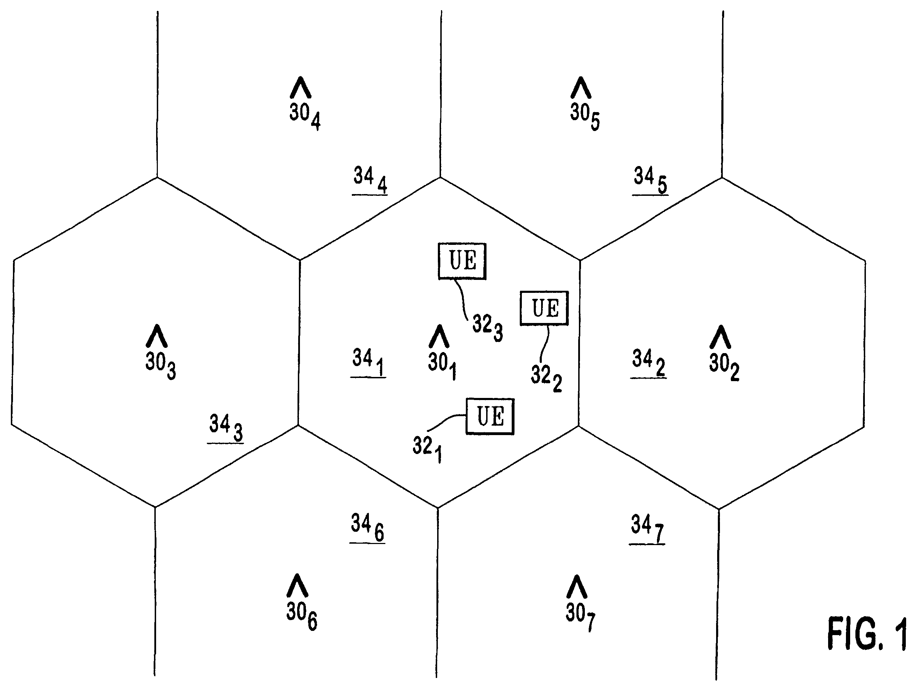

**Figure 1** depicts a wireless spread spectrum TDD/CDMA communication system. The system has a plurality of base stations $30_1$ to $30_7$. Each base station $30_1$ has an associated cell $34_1$ to $34_7$ and communicates with user equipments (UEs) $32_1$ to $32_3$ in its cell $34_1$.

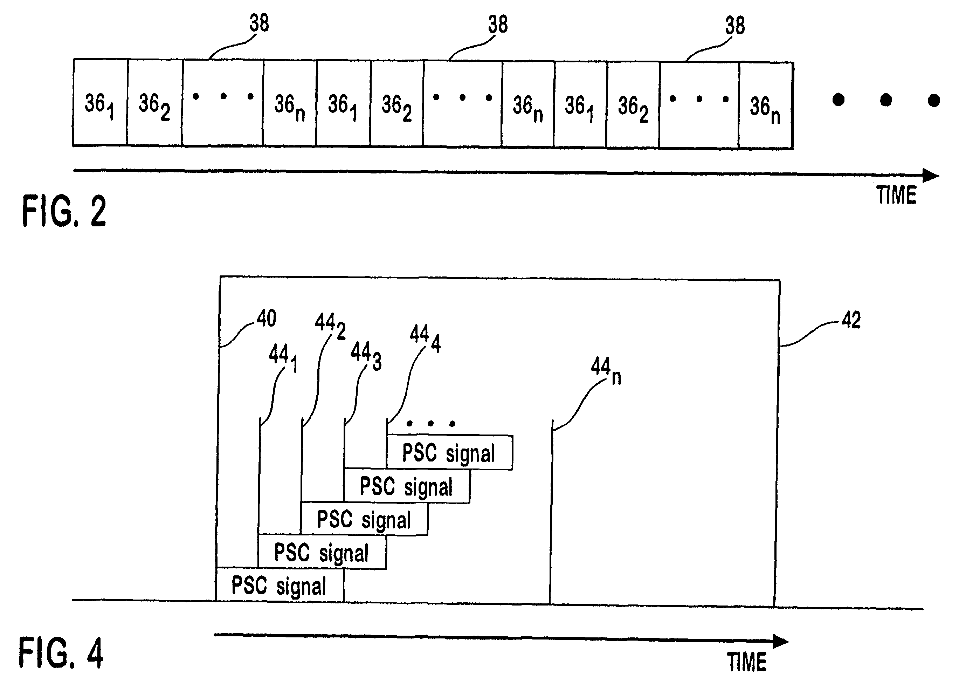

In addition to communicating over different frequency spectrums, TDD/CDMA systems carry multiple communications over the same spectrum. The multiple signals are distinguished by their respective code sequences (codes). Also, to more efficiently use the spectrum, TDD/CDMA systems as illustrated in **Figure 2** use repeating frames **38** divided into a number of time slots $36_1$ to $36_{n_i}$, such as sixteen time slots 0 to 15. In such systems, a communication is sent in selected time slots $36_1$ to $36_n$ using selected codes. Accordingly, one frame **38** is capable of carrying multiple communications distinguished by both time slot $36_1$ to $36_n$ and code.

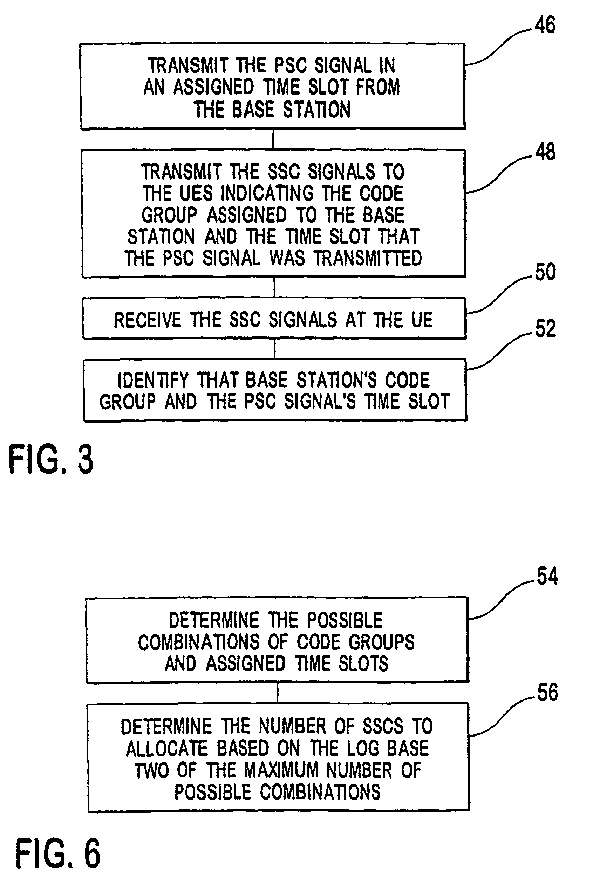

For a UE $32_1$ to communicate with a base station $30_1$, time and code synchronization is required. **Figure 3** is a flow chart of the cell search and synchronization process. Initially, the UE $32_1$ must determine which base station $30_1$ to $30_7$ and cell $34_1$ to $34_7$ to communicate. In a TDD/CDMA system, all the base stations $30_1$ to $30_7$ are time synchronized within a base station cluster. For synchronization with UEs $32_1$ to $32_7$, each base station $30_1$ to $30_7$ sends a Primary Synchronization Code (PSC) and several Secondary Synchronization Code (SSC) signals in the time slot dedicated for synchronization. The PSC signal has an associated chip code, such as an unmodulated 256 hierarchical code, and is transmitted in the dedicated time slot, step **46**. To illustrate, a base station $30_1$ may transmit in one or two time slots, such as for a system using time slots 0 to 15 in time slot K or slot K+8, where K is either 0, ..., 7.

One technique used to generate a PSC signal is to use two 16 hierarchical sequences, such as X1 and X2 in **Equations 1** and **2**.

$$X1 = [1, 1, -1, -1, 1, -1, 1, -1, -1, -1, -1, -1, 1, 1, 1, -1] \qquad \text{Equation 1}$$

$$X2 = [1, 1, -1, -1, -1, -1, 1, -1, 1, 1, -1, 1, 1, 1, -1, 1] \qquad \text{Equation 2}$$

**Equation 3** illustrates one approach to generate a 256 hierarchal code, y(i), using X1 and X2.

$$y(i) = X1 \ (i \bmod 16) \times X2 \ (i \ div \ 16), \text{ where } i = 0, ..., 255 \qquad \text{Equation 3}$$

Using y(i), the PSC is generated such as by combining y(i) with the first row of length 256 Hadamarad matrix, $h_0$, to produce $C_p(i)$ as in **Equation 4**.

$$C_p(i) = y(i) \times h_0(i), \text{ where } i = 0, ..., 255 \qquad \text{Equation 4}$$

Since the first row of the Hadamarad matrix is an all one sequence, **Equation 4** reduces to **Equation 5**.

$$C_p(i) = y(i), \text{ where } i = 0, ..., 255 \qquad \text{Equation 5}$$

The $C_p(i)$ is used to produce a spread spectrum PSC signal suitable for transmission.

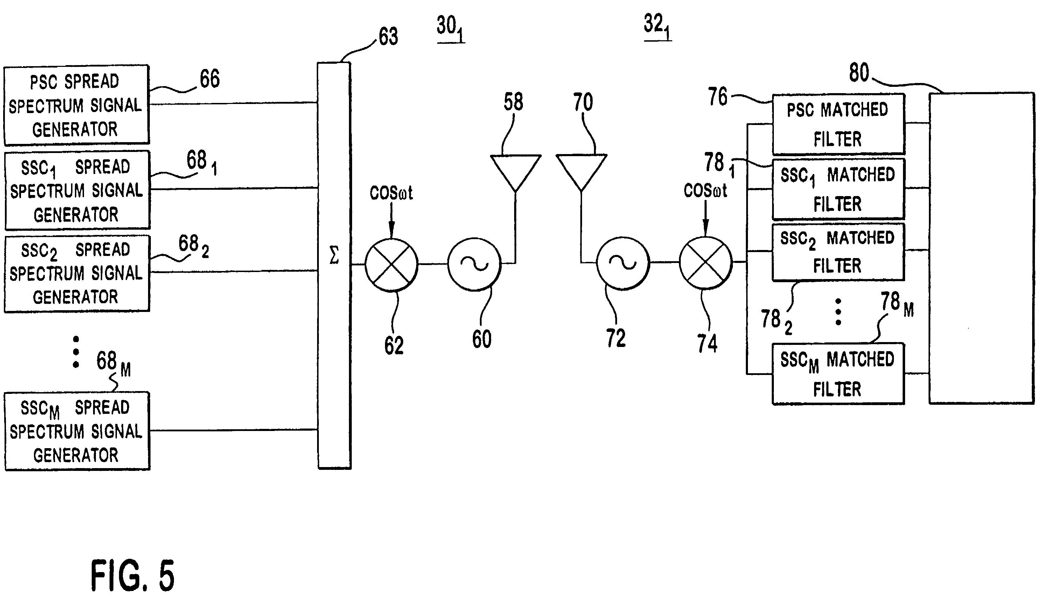

To prevent the base stations' communications from interfering with each other, each base station $30_1$ to $30_7$ sends its PSC signal with a unique time offset, $t_{offset}$, from the time slot boundary **40**. Differing time offsets are shown for time slot **42** in **Figure 4**. To illustrate, a first base station $30_1$ has a first time offset $44_1$, $t_{offset,1}$ for the PSC signal, and a second base station $30_2$, has a second time offset $44_2$, $t_{offset,2}$.

To differentiate the different base stations $30_1$ to $30_7$ and cells $34_1$ to $34_7$, each base station $30_1$ to $30_7$ within the cluster is assigned a different group of codes (code group). One approach for assigning a $t_{offset}$ for a base station using an $n^{th}$ code group $44_n$, $t_{offset,n}$ is **Equation 6**.

$$t_{offset,n} = n \cdot 71T_c \qquad \text{Equation 6}$$

$T_c$ is the chip duration and each slot has a duration of 2560 chips. As a result, the offset $42_n$ for each sequential code group is spaced 71 chips.

Since initially the UE $32_1$ and the base stations $30_1$ to $30_7$ are not time synchronized, the UE $32_1$ searches through every chip in the frame **38** for PSC signals. To accomplish this search, received signals are inputted to a matched filter which is matched to the PSC signal's chip code. The PSC matched filter is used to search through all the chips of a frame to identify the PSC signal of the base station $30_1$ having the strongest signal. This process is referred to as step-1 of cell search procedure.

After the UE $32_1$ identifies the PSC signal of the strongest base station $30_1$, the UE $32_1$ needs to determine the time slot $36_1$ to $36_n$ in which that PSC and SSC signals are transmitted (referred to as the Physical Synchronization Channel (PSCH) time slot) and the code group used by the identified base station $30_1$. This process is referred to as step-2 of cell search procedure. To indicate the code group assigned to the base station $30_1$ and the PSCH time slot index, the base station $30_1$ transmits signals having selected secondary synchronization codes (SSCs), step **48**. The UE $32_1$ receives these SSC signals, step **50**, and identifies the base station's code group and PSCH time slot index based on which SSCs were received, step **52**.

For a TDD system using 32 code groups and two possible PSCH time slots per frame, such as time slots K and K+8, one approach to identify the code group and PSCH time slot index is to send a signal having one of 64 SSCs. Each of the synchronization codes corresponds to one of the 32 code groups and two possible PSCH time slots. This approach adds complexity at the UE $32_1$ requiring at least 64 matched filters and extensive processing. To identify the code group and PSCH time slot index, 17,344 real additions and 128 real multiplications are required in each PSCH time slot and 64 real additions are required for the decision.

An alternative approach for step-2 of cell search procedure uses 17 SSCs. These 17 SSCs are used to index the 32 code groups and two possible PSCH time slots per frame. To implement this approach, at least 17 matched filters are required. To identify the code group and time slot, 1,361 real additions and 34 real multiplications are required for each PSCH time slot. Additionally, 512 real additions are required for the decision.

WO 99/12273 discloses a system for synchronizing to a base station. A base station transmission is divided into time slots. Each time slot includes a primary synchronization code and a secondary synchronization code including both framing synchronization and scrambling or long code information.

TR 101 146 Universal Mobile Telecommunications System 30.06 version 3.0.0 discloses a base station synchronization system. A primary synchronization code is transmitted for a frame and a phase reference. Each of 16 possible base station code groups are assigned to a unique secondary synchronization code. The secondary synchronization code transmitted by the base station identifies the code group of the base station.

Higuchi et al., "Fast Cell Search Algorithm in DS-CDMA Mobile Radio using Long Spreading Codes," discloses a system for assigning long spreading codes to a cell. A control channel is spread by a combination of cell site - unique long code and a short code common to all cell sites. Each cell's transmitted short code has a long code group identifier code to identify the long code.

It would be desirable to reduce the complexity required by a UE $32_1$ to perform cell search procedure.

SUMMARY

A base station sends a synchronization signal in an assigned time slot to a user equipment in a time division duplex code division multiple access communication system. The base station has an assigned code group out of a predetermined number of code groups. The base station transmits selected secondary synchronization code signals out of a set of secondary synchronization code signals. The plurality of secondary synchronization code signals numbers less than half of the predetermined number of code groups. The user equipment identifies the transmitted selected secondary code signals. Based on in part the identified secondary synchronization code signals, the assigned code group is determined.

BRIEF DESCRIPTION OF THE DRAWINGS

**Figure 1** illustrates a prior art TDD/CDMA system.
**Figure 2** illustrates time slots in repeating frames of a TDD/CDMA system.
**Figure 3** is a flow chart of cell search.
**Figure 4** illustrates time offsets used by differing base stations sending primary synchronization code signals.

**Figure 5** is a diagram of the simplified components of a user equipment and a base station using binary phase shift keying modulation for cell search.

**Figure 6** is a flow chart of secondary synchronization code assignment.

**Figure 7** illustrates the simplified components of a user equipment and a base station using quadrature phase shift keying modulation for cell search.

**Figure 8** illustrates the simplified components of a user equipment and a base station reducing the maximum number of transmitted secondary synchronization codes using quadrature phase shift keying modulation.

**Figures 9 to 17** are graphs depicting the performance of various synchronization systems under varying simulated channel conditions.

DETAILED DESCRIPTION OF THE PREFERRED EMBODIMENTS

The preferred embodiments will be described with reference to the drawing figures where like numerals represent like elements throughout. **Figure 5** shows the simplified circuitry of a base station $30_1$ and a UE $32_1$ for use in cell search. During step-1 of the cell search, the base station $30_1$ generates a PSC signal using a PSC spread spectrum signal generator **66** having the time offset in the time slot **42** associated with the base station $30_1$. The PSC signal is combined by a combiner **63** with M SSC signals. The combined signal is modulated by a modulator **62** to carrier frequency. The modulated signal passes through an isolator **60** and is radiated by an antenna **58** or, alternately, an antenna array.

The UE $32_1$ receives signals using an antenna **70** or, alternately, an antenna array. The received signals are passed through an isolator **72** where they are demodulated by a demodulator **74** to baseband frequency. During step-1 of the cell search, the PSC matched filter **76** is used by the processor **80** to search through all the chips of a frame **38** to identify the PSC signal of the base station $30_1$ having the strongest signal.

One approach for detection of a PSC signal location in a frame is as follows. A selected number of positions in the received signal frame, such as forty, having the highest number of accumulated chip matches (i.e. maximum signal strength), are repeatedly correlated at the same positions in subsequent frames **38**. Out of the selected locations, the one having the highest number of cumulative matches (i.e. the maximum signal strength) is identified as the location of the PSC signal.

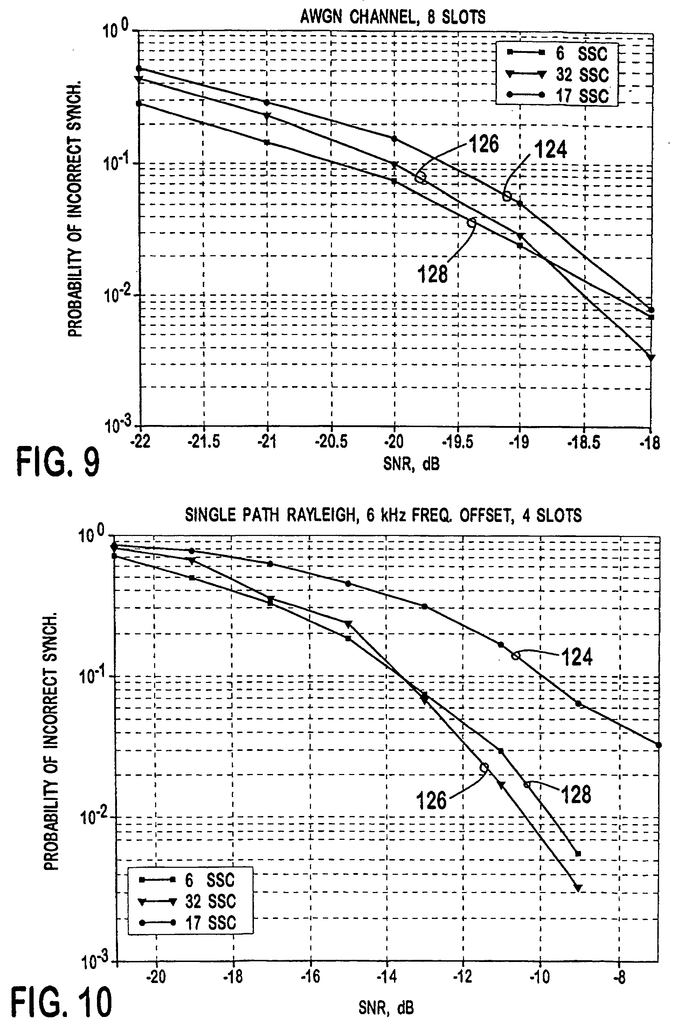

For step-2 of the cell search procedure, the base station $30_1$ generates SSC signals, $SSC_1$ to $SSC_M$, using SSC spread spectrum signal generators $68_1$ to $68_M$. To reduce the complexity at the UE $32_1$, a reduced number of SSCs are used. By reducing the SSCs, the number of matched filters required at the UE $32_1$ is reduced. Additionally, the reduced SSCs decreases the processing resources required to distinguish the different codes. The reduced SSCs also reduces the probability of incorrect detection of a code group number and PSCH time slot index (see **Figures 9-15**).

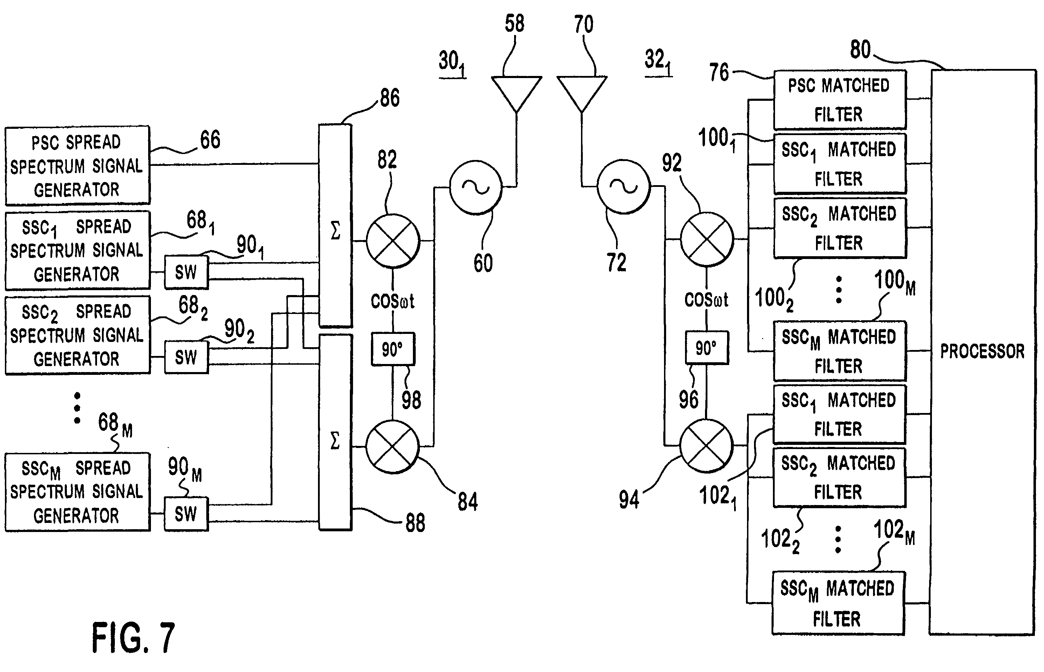

One approach to reduce the SSCs is shown in the flow chart of **Figure 6**. The number of SSCs used, M, is based on the number of code groups and PSCH time slots used per frame, step **54**. The number of SSCs, M, is the log base two of the maximum combination number rounded up to the next higher integer, step **56**, as in **Equation 7**.

$$M = \log_2 (\text{\# of Code Groups x \# of PSCH Time Slots per frame}) \qquad \text{Equation 7}$$

The base station $30_1$ generates, using SSC signal generators $68_1$ to $68_M$, the SSC signals associated with the base station's code group and the number of PSCH time slots per frame. The SSC signals are combined with each other as well as the PSC signal by combiner **63**. Subsequently, the combined signal is modulated by the modulator **62**, passed through the isolator **60** and radiated by the antenna **58**. The UE $32_1$ receives the transmitted signal, passes it through the isolator **72** and demodulates the received signal using the demodulator **74**. Using corresponding $SSC_1$ to $SSC_M$ matched filters $78_1$ to $78_M$, the processor **80** determines the binary code that SSCs are modulated. Based on the determined binary code, the base station's code group and PSCH time slot index in the frame is determined. To illustrate for a system using 32 code groups and two possible time slots per frame, such as slots K and K+8, the number of binary bits needed to modulate SSCs, M, is six ($\log_2 64$). In such a system, the six SSCs are modulated with six bits using binary phase shift keying (BPSK) modulation. The six SSCs are chosen among the 256 rows of Hadamarak matrix, $H_8$. The Hadamarak matrix is generated sequentially, such as by **Equations 8** and **9**.

$$H_0 = (1) \qquad \text{Equation 8}$$

$$H_t = \begin{bmatrix} H_{t-1} & H_{t-1} \\ H_{t-1} & H_{t-1} \end{bmatrix}, \; t = 1,...,8 \qquad \textbf{Equation 9}$$

A particular code, $C_{k,n}(i)$, where n is the code group number associated with a SSC is produced using **Equation 10**. The six rows of Hadamarak matrix, $H_8$, are r(k) = [24, 40, 56, 104, 120, 136].

$$C_{k,n}(i) = b_k,n \times h_{r(k)}(i) \times y(i), \text{ where } i = 0, 1, ..., 255 \text{ and } k = 1, ..., 6 \qquad \text{Equation 10}$$

The value of $b_2$ to $b_6$ are depicted in **Table 1**.

Table 1

| Code Group (n) | $b_{6,n}$ | $b_{5,n}$ | $b_{4,n}$ | $b_{3,n}$ | $b_{2,n}$ |
|---|---|---|---|---|---|
| 1 | +1 | +1 | +1 | +1 | +1 |
| 2 | +1 | +1 | +1 | +1 | -1 |
| 3 | +1 | +1 | +1 | -1 | +1 |
| ... | ... | ... | ... | ... | ... |
| 32 | -1 | -1 | -1 | -1 | -1 |

The value of $b_{1,n}$ is depicted in **Table 2**.

Table 2

| PSCH time slot order in the frame | $b_{1,n}$ |
|---|---|
| K, where K = 0,...,7 | +1 |
| K + 8 | -1 |

Each code corresponds to one SSC, $SSC_1$ to $SSC_6$. To distinguish the differing base stations' SSC signals from one another, each of the base stations' SSC signals has the same offset as its PSC signal. At the UE $32_1$, the step-2 of the cell search procedure (i.e. code group number and PSCH slot order detection) is performed as follows. The received baseband signal is first correlated with $C_p$ as per **Equation 4** to obtain phase reference. This correlation is performed by PSC matched filter **76** in **Figure 5**. The phase reference is obtained by normalizing the correlation value obtained at the output of the PSC matched filter **76**. The received baseband signal is also correlated with C1,...,C6 as per **Equation 10** to obtain binary data that represent the code group of the base station $30_1$ and PSCH slot order in the frame. This correlation is performed by SSC matched filters $78_1$-$78_M$ in **Figure 5**. These matched filter outputs are derotated before BPSK demodulation. The derotation is performed by complex multiplication of the complex conjugate of the phase reference. The derotated SSC matched filter outputs are BPSK demodulated. The BPSK demodulation is performed by a hard limiter on the real part of the derotated SSC matched filter outputs. As a result, if the real part of the derotated SSC matched filter output is greater than zero, it is demodulated as +1. Otherwise, it is demodulated as -1. The demodulated binary data represents the code group of the base station $30_1$ and the PSCH time slot order in the frame as depicted in **Table 1** and **Table 2**, respectively. To ease detection of the six SSCs, the UE $32_1$ accumulates the derotated outputs of the SSC matched filters $78_1$-$78_M$ over a number of the PSCH time slots, such as four or eight.

Using six SSCs, for 32 code groups and two possible PSCH time slots, requires 653 real additions and 28 real multiplications at the UE $32_1$ to identify the code group/PSCH time slot index. For the decision, no additions or multiplications are required. Accordingly, reducing the number of transmitted SSCs in the PSCH time slot reduces the processing at the UE $32_1$.

Alternately, to reduce the number of SSCs even further quadrature phase shift keying (QPSK) modulation is used. To reduce the SSC number, each SSC signal is sent on either an In-phase (I) or Quadrature (Q) component of the PSCH. One extra bit of data associated with either using the I or Q carrier is used to distinguish the code group/ PSCH time slots. As a result, the number of SSCs, M, required by **Equation 6** is reduced by one.

For instance, to distinguish 32 code groups and two possible PSCH time slots, five SSCs (M = 5) are required. The code groups are divided in half (code groups 1-16 and code groups 17-32). When the SSCs are transmitted on the I carrier, it restricts the code groups to the lower half (code groups 1-16) and when the SSCs are transmitted on the Q carrier, it restricts the code groups to the upper half (code groups 17-32). The five SSCs distinguish between the remaining sixteen possible code groups and two possible PSCH time slots.

A simplified base station $30_1$ and UE $32_1$ using QPSK modulation are shown in **Figure 7**. The base station $30_1$ generates the appropriate SSC signals for its code group and PSCH time slot using the SSC spread spectrum signal generators $68_1$ to $68_M$. Also based on the base station's code group/PSCH time slot index, switches $90_1$ to $90_M$ either switch the outputs of the generators $68_1$ to $68_M$ to an I combiner **86** or a Q combiner **88**. The combined I signal which includes the PSC signal is modulated by an I modulator **82** prior to transmission. The combined Q signal is modulated by a Q modulator **84** prior to transmission. One approach to produce the Q carrier for modulating the signal is to delay the I carrier by ninety degrees by a delay device **98**. The UE $32_1$ demodulates the received signals with both an I demodulator **92** and a Q demodulator **94**. Similar to the base station $30_1$, the UE $32_1$ may produce a Q carrier for demodulation using a delay device **96**. Obtaining binary data representing the lower or higher half of the 16 code groups and PSCH time slot index is the same as applying BPSK demodulation on the I and Q components of the received signal respectively. The I matched filters $100_1$ to $100_M$ are used by the processor **80** to determine whether any SSC signals were sent on the I component of the PSCH. A decision variable, $I_{dvar}$, is obtained such as by using **Equation 11**.

$$I_{dvar} = |rx_1| + |rx_2| + ... + |rx_m| \qquad \text{Equation 11}$$

$|rx_i|$ is the magnitude of the real component (I component) of the $i^{th}$ SSC matched filter output. Likewise, the Q matched filters $102_1$ to $102_M$ are used by the processor **80** to determine whether any SSC signals were sent on the Q component of the PSCH. A decision variable, $Q_{dvar}$, is obtained such as by using **Equation 12**.

$$Q_{dvar} = |ix_1| + |ix_2| + ... + |ix_M| \qquad \text{Equation 12}$$

$|ix_i|$ is the magnitude of the imaginary (Q component) of the $i^{th}$ SSC matched filter outputs.
If $I_{dvar}$ is greater than $Q_{dvar}$, the SSC signals were transmitted on the I component. Otherwise, the SSC signals were transmitted on the Q component.

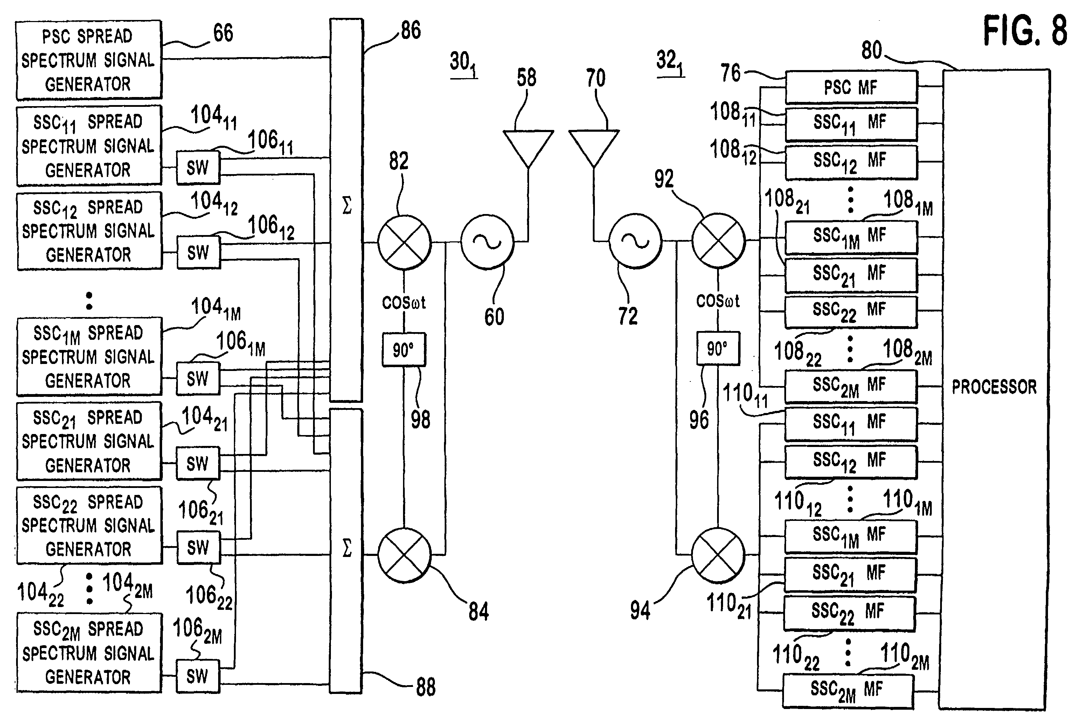

Another approach using QPSK modulation to reduce the number of SSC signals transmitted is depicted in **Figure 8**. Instead of transmitting the number of SSCs of **Figure 7**, the number of SSCs, M, representing the code group number and PSCH time slot index is reduced by one. To regain the one lost bit of information by reducing the SSCs, two sets of M SSCs are used. For instance using 32 code groups and two possible PSCH time slots, one set, $SSC_{11}$ to $SSC_{14}$, is assigned to the lower code groups, such as code groups 1 to 16, and the second set, $SSC_{21}$ to $SSC_{24}$, is assigned to the upper code groups, such as code groups 17 to 32. For the lower code group, sending $SSC_{11}$ to $SSC_{14}$ on the I carrier restricts the code groups to 1 to 8. The Q carrier restricts the code groups to 9 to 16. Likewise, for the upper code group, in phase $SSC_{21}$ to $SSC_{24}$ restricts the code groups to 17 to 24 and Q $SSC_{21}$ to $SSC_{24}$ restricts the code groups to 25 to 32. As a result, the maximum number of SSCs transmitted at one time is reduced by one. By reducing the number of SSCs, the interference between SSC signals is reduced. Reduced interference between SSCs allows higher transmission power levels for each SSC signal easing detection at the UE $32_1$.

A simplified base station $30_1$ and UE $32_1$ implementing the reduced SSC approach is shown in **Figure 8**. At the base station $30_1$, two sets of M SSC spread spectrum signal generators $104_{11}$ to $104_{2M}$ generate the SSC signals corresponding to the base station's code group and PSC time slot. The corresponding SSC signals are switched using switches $106_{11}$ to $106_{2M}$ to either an **I 82** or Q modulator **84** as appropriate for that base station's code group and PSCH time slot. At the UE $32_1$, an I set of matched filters $108_{11}$ to $108_{2Q}$ is used to determine if any of the SSCs were sent on the I carrier. A Q set of matched filters $110_{11}$ to $110_{2M}$ is used to determine if any of the SSCs were sent on the Q carrier. By detecting the transmitted I and Q SSCs, the processor **80** determines the base station's code group and PSCH time slot.

One approach to determining which of 32 code groups and two possible PSCH time slots is used by the base station $32_1$ follows. After the processor **80** accumulates data from matched filters $110_{11}$ to $110_{24}$, the code group set, either $SSC_{11}$ to $SSC_{14}$ or $SSC_{21}$ to $SSC_{24}$, is determined using **Equations 13** and **14**.

$$\text{var\_ set 1} = |r\, x_{11}| + |i\, x_{12}| + ... + |r\, x_{14}| + |i\, x_{14}| \qquad \text{Equation 13}$$

$$\text{var\_ set 2} = |r\, x_{21}| + |i\, x_{22}| + ... + |r\, x_{24}| + |i\, x_{24}| \qquad \text{Equation 14}$$

The values, $rx_{11}$ to $rx_{24}$, are the number of accumulated matches for a respective SSC, $SSC_{11}$ to $SSC_{24}$, received in the I channel. Similarly, $ix_{11}$ to $ix_{24}$ are the number of accumulated matches for the Q channel for $SSC_{11}$ to $SSC_{24}$. **Equations 13** and **14** require a total of 16 real additions. var_set 1 represents the total accumulations of the first SSC set, $SSC_{11}$ to $SSC_{14}$. var_set 2 represents the total accumulations of the second SSC set, $SSC_{21}$ to $SSC_{24}$. The processor **80** compares var_set 1 to var_set 2 and the larger of the two variables is presumed to be the SSC set transmitted by the base station $32_1$.

To determine whether the SSCs were transmitted on the I or Q channel, **Equations 15** and **16** are used.

$$\text{var\_I} = |r\,x_{p1}| + ... + |r\,x_{p4}| \qquad \text{Equation 15}$$

$$\text{var\_Q} = |i\,x_{p1}| + ... + |i\,x_{p4}| \qquad \text{Equation 16}$$

If var_set 1 is selected as being larger than var_set 2, the value of p is one. Conversely, if var_set 2 is larger, the value of p is two. var_I is the accumulated values for the selected set on the I carrier and var_Q is the accumulated values on the Q carrier. The larger of the two variables, var_I and var_Q, is presumed to be the channel that the selected set was transmitted over. By ordering the additions in **Equations 13** and **14**, the values of var_I and var_Q can be determined simultaneously with var_set 1 and var_set 2. Accordingly, determining whether the I or Q carrier was used requires no additional additions. As a result, using QPSK modulation and two SSC sets requires 803 real additions and 36 real multiplications in each time slot and 16 real additions for the decision.

**Figures 9** to **15** are graphs illustrating the performance for distinguishing 32 code groups/two PSCH time slots of systems using 32 SSCs **128**, 17 SSCs **124** and 6 SSCs **126**. The graphs show the performance for various simulated channel conditions. The simulations accumulated the SSC matches at the UE $32_1$ over four or eight PSCH time slots and compared the probability of an incorrect synchronization to the channel's signal to noise ratio (SNR) in decibels.

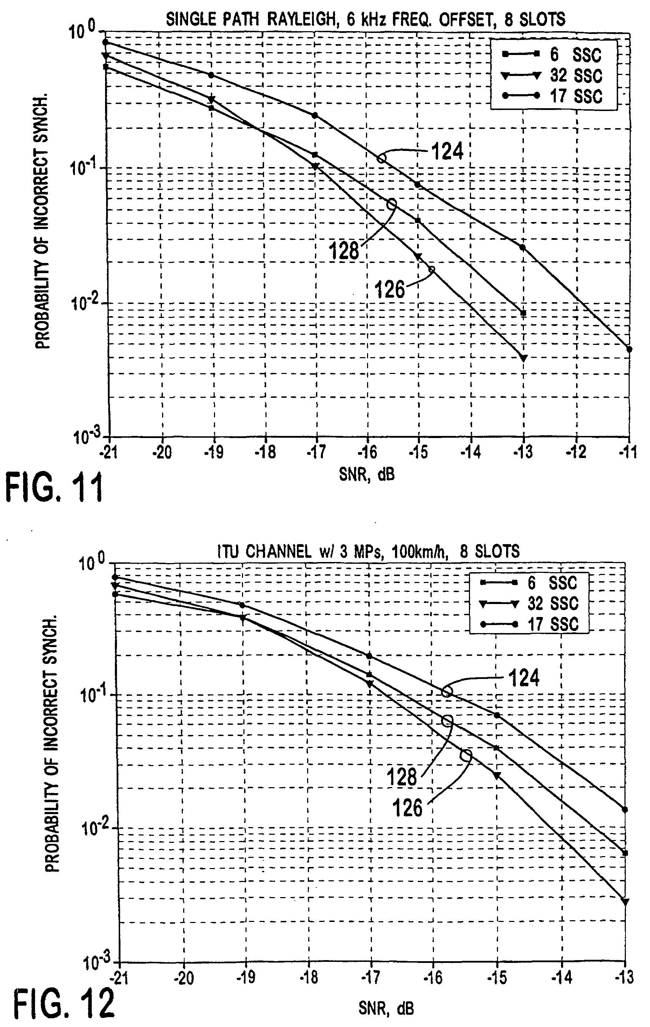

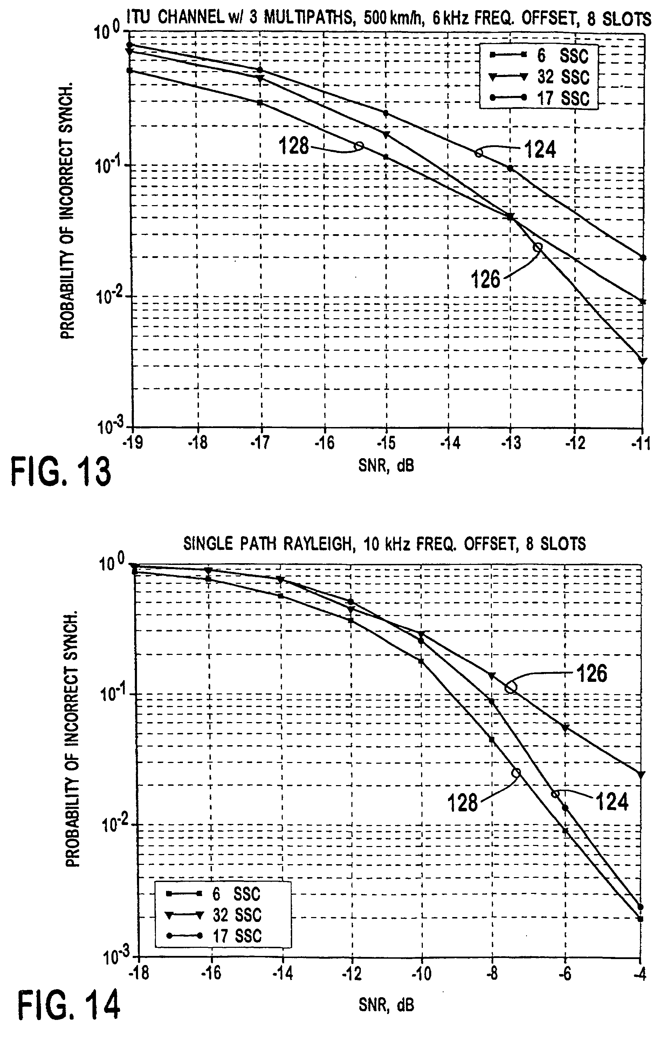

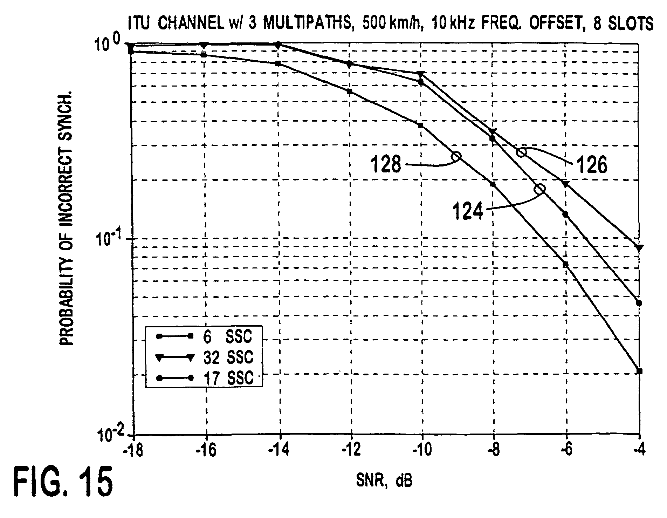

The **Figure 9** simulation uses an additive white gaussian noise (AWGN) channel and accumulation over eight PSCH time slots. The **Figure 10** simulation uses a single path Rayleigh fading channel with a six kilohertz (kHz) frequency offset and accumulation over four PSCH time slots. The **Figure 11** simulation is the same as the **Figure 10** simulation except the accumulation was over eight PSCH time slots. The **Figure 12** simulation uses an ITU channel with three multipaths with a UE $32_1$ moving at 100 kilometers per hour (km/h) and accumulation over eight PSCH time slots. The **Figure 13** simulation uses an ITU channel with three multipaths having six kilohertz (kHz) frequency offset and a UE $32_1$ moving at 500 km/h with accumulation over eight PSCH time slots. The **Figure 14** simulation uses a single path Rayleigh channel having 10 kHz frequency offset with accumulation over eight PSCH time slots. The **Figure 15** simulation uses an ITU channel with three multipaths having 10 kHz frequency offset and the UE $32_1$ moving at 500 km/h with accumulation over eight PSCH time slots.

Under the simulated conditions of **Figures 14** and **15**, 6 SSCs 128 outperforms the other techniques **124, 126**. As shown in **Figures 9** to **13**, 6 SSCs **128** performs favorably in comparison to the other techniques **124, 126**.

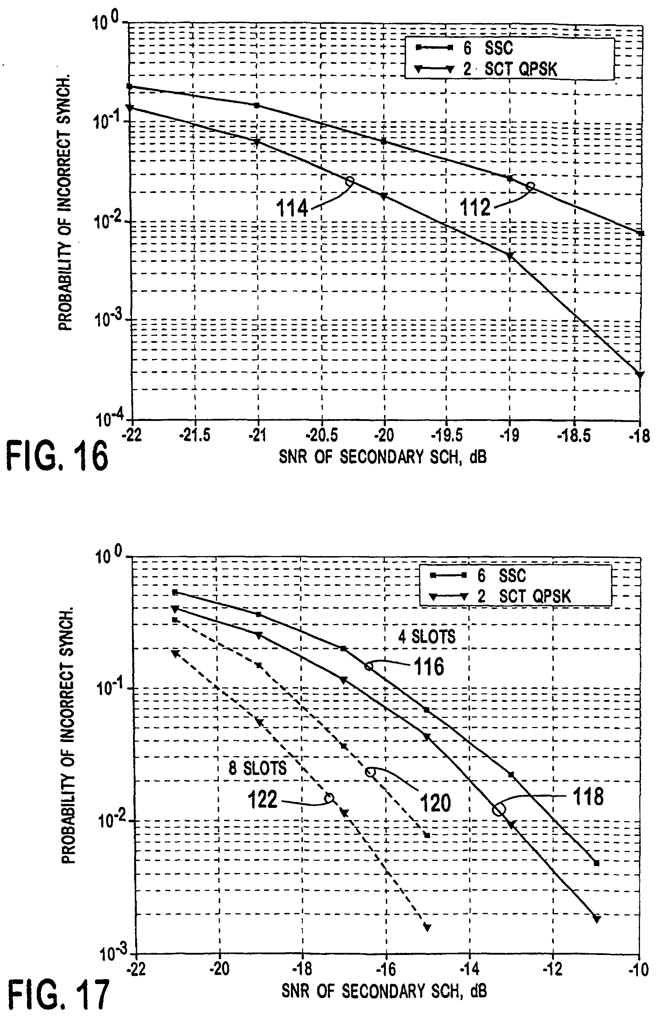

**Figure 16** is a graph of the simulated performance of 6 SSCs **114** using BPSK and the two sets of 4 SSCs **112** using QPSK modulation. The simulation used an eight PSCH time slot accumulation of the matches for each SSC and transmission over an AWGN channel. As shown, two set QPSK modulation **112** outperformed 6 SSC BPSK modulation **114**.

**Figure 17** illustrates the performance of BPSK and two set QPSK modulation accumulating matches over four and eight PSCH time slots. The SSCs were simulated as being transmitted over a single path Rayleigh channel. Performance for both modulation schemes improves with additional time slot correlations. Two set QPSK modulation for four PSCH time slots **116** and eight PSCH time slots **120** outperforms BPSK modulation for four PSCH time slots **118** and eight PSCH time slots **122**, respectively.

## Claims

**1.** A method for a user equipment (32) to synchronize both timing and a code group assigned to a base station (30) in a time division duplex code division multiple access communication system, the system communicating using time slots in repeating frames, the assigned code group being one out of a predetermined number N of possible code groups, the method comprising: transmitting from the base station (30) a primary code synchronization signal in a selected time slot in a primary code synchronization channel (46), the primary code synchronization channel using a plurality of the frame time slots for communication; receiving at the user equipment (32) the primary code synchronization signal; and time synchronizing the user equipment with a received timing of the primary code synchronization signal; the method **characterized by**:

associating each combination of said N code groups and said plurality of the frame time slots with a unique combination of secondary synchronization signals from a set of secondary synchronization signals which does not exceed $(\log_2 N) + 1$ in number (54, 56);
transmitting from the base station (30) selected secondary synchronization signals out of said set of secondary synchronization signals; corresponding to the unique combination of secondary synchronization signals associated with the assigned code group and the selected time slot (48);
receiving and identifying at the user equipment (32) the transmitted selected secondary synchronization signals (50); and
based on the identified selected secondary synchronization signals, determining the base station's assigned code group and the selected time slot (52).

2. The method of claim 1 further **characterized by** each of a plurality of base stations (30) transmit a primary code synchronization signal and the user equipment (32) accumulates chip matches over a set number of frames to determine which of the plurality of base stations (30) to communicate.

3. The method of claim 2 further **characterized by** the set number of frames is forty.

4. The method of claim 1 further **characterized by** the transmitted secondary synchronization signals are modulated with binary data.

5. The method of claim 4 further **characterized by** the modulated binary data identifies the base station's code group.

6. The method of claim 1 further **characterized by** the transmitted secondary signals are selectively transmitted using an in-phase or quadrature phase carrier.

7. The method of claim 1 further **characterized by** correlating the primary code synchronization signal with the transmitted secondary signals to obtain phase reference.

8. The method of claim 7 further **characterized by** the primary code synchronization signal is not modulated with data.

9. The method of claim 7 further **characterized by** derotating the received secondary signals based on the primary code synchronization signal phase reference.

10. The method of claim 9 further **characterized by** match filtering the received secondary signals and accumulating results of the match filtering over a set number of frames.

11. A wireless time division duplex code division multiple access communication system using time slots in repeating frames, the system having a base station (30) and a user equipment (32), the base station (30) having an assigned code group out of a predetermined number N of possible code groups and having means (66, 62, 60, 58) for transmitting a primary code synchronization signal in a selected time slot in a primary code synchronization channel, the primary code synchronization channel using a plurality of the frame time slots for communication, the user equipment (32) having means (70, 72, 74, 76) for receiving the primary code synchronization signal and means (80) for time synchronization with a received timing of the primary code synchronization signal, the system **characterized by**:

the base station (30) further comprising:

means (68, 90, 104) for associating each combination of said N code groups and said plurality of the frame time slots with a unique combination of secondary synchronisation signals from a set of secondary synchronisation signals which does not exceed $(\log_2 N) + 1$ in number; and
means (68, 63, 62, 60, 58, 90, 104) for transmitting secondary synchronisation signals associated with the base stations assigned code group and the selected time slot; and

a user equipment (32) further comprising:

means (70, 72, 74, 78, 100, 102, 108, 110) for receiving and identifying the transmitted selected secondary synchronization signals; and

means (80) for determining the base station's assigned code group and the selected time slot, based on the identified selected secondary synchronization signals.

12. The system of claim 11 further **characterized by** the receiving and identifying means (70, 72, 74, 78, 100, 102, 108, 110) comprises a plurality of matched filters (78), at least one matched filter (78) is matched to each secondary synchronization signal out of the set of secondary synchronization signals.

13. The system of claim 12 further **characterized by** the secondary signals are transmitted either on an in-phase or quadrature phase carrier and the plurality of matched filters having an in-phase and a quadrature phase matched filter (100,102, 108,110) for each secondary signal out of the set of secondary signals.

14. The system of claim 11 further **characterized by** the associating means (68) associates a selected time slot in the frames with the unique combination of secondary signals.

15. The system of claim 11 further **characterized by** the base station (30) is one of a plurality of base stations (30), each base station (30) transmits a primary code synchronization signal and the user equipment (32) further comprising means (80) for accumulating chip matches over a set number of frames to determine which of the plurality of base stations to communicate.

16. The system of claim 15 further **characterized by** the set number of frames is forty.

17. The system of claim 11 further **characterized by** the transmitted secondary synchronization signals are selectively transmitted using an in-phase or quadrature phase carrier.

18. The system of claim 11 further **characterized by** the user equipment (32) further comprises means (80) for correlating the primary code synchronization signal with the transmitted secondary synchronization signals to obtain phase reference.

19. The system of claim 18 further **characterized by** the primary code synchronization signal is not modulated with data.

20. The system of claim 18 further **characterized by** the user equipment (32) further comprises means for derotating the received secondary signals based on the primary code synchronization signal phase reference.

21. The system of claim 20 further **characterized by** the user equipment further comprises means (78, 100, 102, 108, 110) for matched filtering the received secondary signals and means (80) for accumulating results of the match filtering over a set number of frames.

22. A set of synchronization signals for use in a wireless time division duplex communication system . the time division duplex communication system using time slots in repeating frames for communication,

selected synchronization signals out of said set of synchronization signals are transmitted from a base station (30) for use in synchronizing a user equipment (32), the base station (30) being associated with an assigned code group out of a predetermined number N of possible code groups and a selected time slot out of a plurality of primary synchronization channel time slots, the set of synchronization signals **characterized by**:

the set of synchronization signals, which does not exceed $(\log_2 N)$ +1 in number, identifying the assigned code group and the selected time slot.

23. The set of synchronization signals of claim 22 further **characterized by** the set of synchronization signals having binary bits produced by combining a binary code group identifier with a selected row of a Hadamard matrix.

24. The set of synchronization signals of claim 23 further **characterized by** the selected row is from a set of potential selected rows; the potential selected rows comprising row 24, 40, 56, 104, 120 and 136.

25. The set of synchronization signals of claim 22 further **characterized by** being at a predetermined time offset from a time slot's leading boundary.

**26.** The set of synchronization signals of claim 22 further **characterized by** each synchronization signal of the set of synchronization signals is selectively transmitted using an in-phase or quadrature phase carrier.

**Patentansprüche**

**1.** Verfahren für ein Benutzergerät (32) zum Synchronisieren sowohl einer Zeitabstimmung als auch einer einer Basisstation (30) zugeordneten Codegruppe in einem TDD-CDMA-Kommunikationssystem (Zeitteilungs-Duplex-Codemultiplex-Vielfachzugriffs-Kommunikationssystem), wobei das System unter der Verwendung von Zeitschlitzen in sich wiederholenden Rahmen kommuniziert, wobei die zugewiesene Codegruppe eine aus einer vorbestimmten Anzahl N möglicher Codegruppen ist, wobei das Verfahren die folgenden Schritte aufweist: von der Basisstation (30) ausgehendes Senden eines primären Codesynchronisationssignals in einem ausgewählten Zeitschlitz in einem primären Codesynchronisationskanal (46), wobei der primäre Codesynchronisationskanal mehrere Rahmenzeitschlitze zur Kommunikation verwendet; beim Benutzergerät (32) stattfindendes Empfangen des primären Codesynchronisationssignals; und Zeitsynchronisieren des Benutzergeräts mit einer empfangenen Zeitabstimmung des primären Codesynchronisationssignals; wobei das Verfahren **gekennzeichnet ist durch**:

- Zuordnen jeder Kombination der N Codegruppen und der mehreren Rahmenzeitschlitze zu einer einzigartigen Kombination sekundärer Synchronisationssignale aus einer Menge sekundärer Synchronisationssignale, deren Anzahl (54, 56) ($\log_2 N$) + 1 nicht überschreitet;
- von der Basisstation (30) ausgehendes Senden ausgewählter sekundärer Synchronisationssignale aus der Menge der sekundären Synchronisationssignale, die der einzigartigen Kombination sekundärer Synchronisationssignale entspricht, die der zugewiesenen Codegruppe und dem ausgewählten Zeitschlitz (48) zugeordnet sind;
- beim Benutzergerät (32) stattfindendes Empfangen und Identifizieren der gesendeten ausgewählten sekundären Synchronisationssignale (50); und
- Bestimmen der zugewiesenen Codegruppe der Basisstation und des Zeitschlitzes (52) auf der Grundlage der identifizierten ausgewählten sekundären Synchronisationssignale.

**2.** Verfahren nach Anspruch 1, weiter **dadurch gekennzeichnet, dass** jede der mehreren Basisstationen (30) ein primäres Codesynchronisationssignal sendet und das Benutzergerät (32) Chipübereinstimmungen über eine festgelegte Anzahl von Rahmen ansammelt, um zu bestimmen, welche von den mehreren Basisstationen (30) zur Kommunikation zu verwenden ist.

**3.** Verfahren nach Anspruch 2, weiter **dadurch gekennzeichnet, dass** die festgelegte Anzahl von Rahmen vierzig ist.

**4.** Verfahren nach Anspruch 1, weiter **dadurch gekennzeichnet, dass** die gesendeten sekundären Synchronisationssignale mit binären Daten moduliert werden.

**5.** Verfahren nach Anspruch 4, weiter **dadurch gekennzeichnet, dass** die modulierten binären Daten die Codegruppe der Basisstation identifizieren.

**6.** Verfahren nach Anspruch 1, weiter **dadurch gekennzeichnet, dass** die gesendeten sekundären Signale selektiv unter der Verwendung eines phasengleichen oder um 90° phasenverschobenen Trägers gesendet werden.

**7.** Verfahren nach Anspruch 1, weiter **gekennzeichnet durch** das Korrelieren des primären Codesynchronisationssignals mit den gesendeten sekundären Signalen zum Erhalten einer Phasenreferenz.

**8.** Verfahren nach Anspruch 7, weiter **dadurch gekennzeichnet, dass** das primäre Codesynchronisationssignal nicht mit Daten moduliert wird.

**9.** Verfahren nach Anspruch 7, weiter **gekennzeichnet durch** das Derotieren der empfangenen sekundären Signale auf der Grundlage der Phasenreferenz des primären Codesynchronisationssignals.

**10.** Verfahren nach Anspruch 9, weiter **gekennzeichnet durch**
Anpassfiltern der empfangenen sekundären Signale und Ansammeln der Ergebnisse der Anpassfilterung über eine festgelegte Anzahl von Rahmen.

**11.** Drahtloses TDD-CDMA-Kommunikationssystem (Zeitteilungs-Duplex-Codemultiplex-Vielfachzugriffs-Kommunikationssystem), das Zeitschlitze in sich wiederholenden Rahmen verwendet, wobei das System eine Basisstation (30) und ein Benutzergerät (32) aufweist, wobei die Basisstation (30) eine zugewiesene Codegruppe aus einer vorbestimmten Anzahl N möglicher Codegruppen und eine Einrichtung (66, 62, 60, 58) zum Senden eines primären Codesynchronisationssignals in einem ausgewählten Zeitschlitz in einem primären Codesynchronisationskanal aufweist, wobei der primäre Codesynchronisationskanal mehrere der Rahmenzeitschlitze zur Kommunikation verwendet, wobei das Benutzergerät (32) eine Einrichtung (70, 72, 74, 76) zum Empfangen des primären Codesynchronisationssignals und eine Einrichtung (80) zur Zeitsynchronisation mit einer empfangenen Zeitabstimmung des primären Codesynchronisationssignals aufweist, wobei das System **dadurch gekennzeichnet ist, dass**:

die Basisstation (30) weiter aufweist:

- eine Einrichtung (68, 90, 104) zum Zuordnen jeder Kombination der N Codegruppen und der mehreren Rahmenzeitschlitze zu einer einzigartigen Kombination sekundärer Synchronisationssignale aus einer Menge sekundärer Synchronisationssignale, deren Anzahl $(\log_2 N) + 1$ nicht überschreitet; und
- eine Einrichtung (68, 63, 62, 60, 58, 90, 104) zum Senden sekundärer Synchronisationssignale, die der Codegruppe der Basisstation und dem ausgewählten Zeitschlitz zugeordnet sind; und

ein Benutzergerät (32) weiter aufweist:

- eine Einrichtung (70, 72, 74, 78, 100, 102, 108, 110) zum Empfangen und Identifizieren der gesendeten ausgewählten sekundären Synchronisationssignale; und
- eine Einrichtung (80) zum Bestimmen der zugewiesenen Codegruppe der Basisstation und des ausgewählten Zeitschlitzes auf der Grundlage der identifizierten ausgewählten sekundären Synchronisationssignale.

**12.** System nach Anspruch 11, weiter **dadurch gekennzeichnet, dass** die Empfangs- und Identifikationseinrichtung (70, 72, 74, 78, 100, 102, 108, 110) mehrere angepasste Filter (78) aufweist, wobei mindestens ein angepasstes Filter (78) an das jeweilige sekundäre Synchronisationssignal aus der Menge der sekundären Synchronisationssignale angepasst ist.

**13.** System nach Anspruch 12, weiter dädurch gekennzeichnet, dass die sekundären Signale entweder auf einem phasengleichen oder einem um 90° phasenverschobenen Träger gesendet werden und die mehreren angepassten Filter ein phasengleiches und ein um 90° phasenverschobenes angepasstes Filter (100, 102, 108, 110) für jedes sekundäre Signal aus der Menge sekundärer Signale haben.

**14.** System nach Anspruch 11, weiter **dadurch gekennzeichnet, dass** die Zuordnungseinrichtung (68) einen ausgewählten Zeitschlitz der Rahmen zu der einzigartigen Kombination sekundärer Signale zuordnet.

**15.** System nach Anspruch 11, weiter **dadurch gekennzeichnet, dass** die Basisstation (30) eine aus mehreren Basisstationen (30) ist, wobei jede Basisstation (30) ein primäres Codesynchronisationssignal sendet und das Benutzergerät (32) weiter eine Einrichtung (80) zum Ansammeln von Chipübereinstimmungen über eine festgelegte Anzahl von Rahmen aufweist, um zu bestimmen, welche aus den mehreren Basisstationen zur Kommunikation zu verwenden ist.

**16.** System nach Anspruch 15, weiter **dadurch gekennzeichnet, dass** die festgelegte Anzahl von Rahmen vierzig ist.

**17.** System nach Anspruch 11, weiter **dadurch gekennzeichnet, dass** diegesendeten sekundären Signale selektiv unter der Verwendung eines phasengleichen oder um 90° phasenverschobenen Trägers gesendet werden.

**18.** System nach Anspruch 11, weiter **dadurch gekennzeichnet, dass** das Benutzergerät (32) weiter eine Einrichtung (80) zum Korrelieren des primären Codesynchronisationssignals mit den gesendeten sekundären Synchronisationssignalen zum Erhalten einer Phasenreferenz aufweist.

**19.** System nach Anspruch 18, weiter **dadurch gekennzeichnet, dass** das primäre Codesynchronisationssignal nicht mit Daten moduliert wird.

**20.** System nach Anspruch 18, weiter **dadurch gekennzeichnet, dass** das Benutzergerät (32) weiter eine Einrichtung zum Derotieren der empfangenen sekundären Signale auf der Grundlage der Phasenreferenz des primären Codesynchronisationssignals aufweist.

21. System nach Anspruch 20, weiter **dadurch gekennzeichnet, dass** das Benutzergerät weiter eine Einrichtung (78, 100, 102, 108, 110) zur Anpassfilterung der empfangenen sekundären Signale und eine Einrichtung (80) zum Ansammeln von Ergebnissen der Anpassfilterung über eine festgelegte Anzahl von Rahmen aufweist.

22. Menge von Synchronisationssignalen zur Verwendung in einem drahtlosen TDD-Kommunikationssystem (Zeitteilungs-Duplex-Kommunikationssystem), wobei das TDD-Kommunikationssystem Zeitschlitze in sich wiederholenden Rahmen zur Kommunikation verwendet, wobei ausgewählte Synchronisationssignale aus der Menge von Synchronisationssignalen von einer Basisstation (30) zur Verwendung bei der Synchronisation eines Benutzergeräts (32) gesendet werden, wobei die Basisstation (30) einer zugewiesenen Codegruppe aus einer vorbestimmten Anzahl N möglicher Codegruppen und einem ausgewählten Zeitschlitz aus mehreren primären Synchronisationskanal-Zeitschlitzen zugeordnet ist, wobei die Menge von Synchronisationssignalen **dadurch gekennzeichnet ist, dass**: die Menge von Synchronisationssignalen, deren Anzahl $(\log_2 N) + 1$ nicht überschreitet, die zugewiesene Codegruppe und den ausgewählten Zeitschlitz identifiziert.

23. Menge von Synchronisationssignalen nach Anspruch 22, weiter **dadurch gekennzeichnet, dass** die Menge von Synchronisationssignalen binäre Bits aufweist, die durch Kombinieren einer binären Codegruppenidentifikation mit einer ausgewählten Zeile einer Hadamard-Matrix erzeugt werden.

24. Menge von Synchronisationssignalen nach Anspruch 23, weiter **dadurch gekennzeichnet, dass** die ausgewählte Zeile aus einer Menge potentieller ausgewählter Zeilen ist; wobei die potentiellen ausgewählten Zeilen die Zeilen 24, 40, 56, 104, 120 und 136 umfassen.

25. Menge von Synchronisationssignalen nach Anspruch 22, weiter **dadurch gekennzeichnet, dass** sie sich mit einem vorbestimmten Zeitversatz zu einer Zeitschlitzvordergrenze befinden.

26. Menge von Synchronisationssignalen nach Anspruch 22, weiter **dadurch gekennzeichnet, dass** jedes Synchronisationssignal aus der Menge von Synchronisationssignalen selektiv unter der Verwendung eines phasengleichen oder um 90° phasenverschobenen Trägers gesendet wird.

**Revendications**

1. Procédé permettant à un équipement (32) d'utilisateur de synchroniser à la fois le rythme et un groupe de code attribué à une station de base (30) dans un système de communication à accès multiple par répartition de code, en duplex et par répartition dans le temps, le système communiquant en utilisant des tranches de temps dans des trames répétées, le groupe de code attribué étant un groupe de code parmi un nombre prédéterminé N de groupes de codes possibles, le procédé comprenant les étapes consistant à :

transmettre, à partir de la station de base (30), un signal de synchronisation de code primaire dans une tranche de temps choisie d'une voie de synchronisation (46) de code primaire, la voie de synchronisation de code primaire utilitsant une pluralité de tranches de temps dans la trame pour communiquer ;

recevoir, au niveau de l'équipement (32) d'utilisateur, le signal de synchronisation de code primaire ; et

synchroniser dans le temps l'équipement d'utilisateur avec un rythme reçu du signal de synchronisation de code primaire ;

le procédé étant **caractérisé en ce qu'**il prévoit de :

associer chaque combinaison desdits N groupes de codes et de ladite pluralité de tranches de temps des trames à une combinaison unique de signaux secondaires de synchronisation provenant d'un ensemble de signaux secondaires de synchronisation dont le nombre (54, 56) ne dépasse pas $(\log_2 N) + 1$ ;

transmettre, à partir de la station de base (30), les signaux de synchronisation secondaires choisis dans ledit ensemble de signaux de synchronisation secondaires ; correspondant à la combinaison unique de signaux secondaires de synchronisation associée au groupe de code attribué et à la tranche de temps (48) choisie ;

recevoir et Identifier, au niveau de l'équipement (32) d'utilisateur, les signaux de synchronisation secondaires (50) choisis transmis ; et

en fonction des signaux de synchronisation secondaires choisis identifiés, déterminer le groupe de code attribué de la station de base et la tranche de temps (52) choisie.

2. Procédé selon la revendication 1, **caractérisé en outre en ce que** chaque station de base (30) d'une pluralité de stations de base (30) transmet un signal de synchronisation de code primaire et dans lequel l'équipement (32) d'utilisateur accumule des correspondances d'éléments sur un nombre défini de trames pour déterminer avec quelle station (30) de base de la pluralité de stations de base (30) communiquer.

3. Procédé selon la revendication 2, **caractérisé en outre en ce que** le nombre défini de trames est égal à quarante.

4. Procédé selon la revendication 1, **caractérisé en outre en ce que** les signaux secondaires de synchronisation transmis sont modulés avec des données binaires.

5. Procédé selon la revendication 4, **caractérisé en outre en ce que** les données binaires modulées identifient le groupe de code de la station de base.

6. Procédé selon la revendication 1, **caractérisé en outre en ce que** les signaux secondaires transmis sont transmis de façon sélective à l'aide d'une porteuse en phase ou en quadrature de phase.

7. Procédé selon la revendication 1, **caractérisé en outre par** la mise en corrélation du signal de synchronisation de code primaire avec les signaux secondaires transmis pour obtenir une référence de phase.

8. Procédé selon la revendication 7, **caractérisé en outre en ce que** le signal de synchronisation de code primaire n'est pas modulé avec des données.

9. Procédé selon la revendication 7, **caractérisé en outre par** le redressement des signaux secondaires reçus sur la base de la référence de phase du signal de synchronisation de code primaire.

10. Procédé selon la revendication 9, **caractérisé en outre par** le filtrage correspondant des signaux secondaires reçus et l'accumulation des résultats du filtrage correspondant sur un nombre défini de trames.

11. Système de communication à accès multiple par répartition de code, en duplex, par répartition dans le temps et sans fil utilisant des tranches de temps dans des trames répétées, le système comprenant une station de base (30) et un équipement (32) d'utilisateur ;
la station de base (30) ayant un groupe de code attribué provenant d'un nombre prédéterminé N de groupes de codes possibles et comprenant :

des moyens (66, 62, 60, 58) permettant de transmettre un signal de synchronisation de code primaire dans une tranche de temps choisie dans une vole de synchronisation de code primaire, la voie de synchronisation de code primaire utilisant une pluralité de tranches de temps de la trame pour communiquer ;

l'équipement d'utilisateur (32) comprenant :

des moyens (70, 72, 74, 76) permettant de recevoir le signal de synchronisation de code primaire et

des moyens (80) permettant une synchronisation dans le temps avec le rythme reçu du signal de synchronisation de code primaire ;

le système étant **caractérisé en ce que** :

la station de base (30) comprend en outre :

des moyens (68, 90, 104) permettant d'associer chaque combinaison desdits N groupes de codes et de ladite pluralité de tranches de temps des trames à une combinaison unique de signaux secondaires de synchronisation provenant d'un ensemble de signaux secondaires de synchronisation dont le nombre ne dépasse pas $(log_2 N) + 1$ ; et

des moyens (68, 63, 62, 60, 58, 90, 104) pour transmettre les signaux secondaires de synchronisation associés avec le groupe de code attribué de station de la base et la tranche de temps choisie ; et

l'équipement (32) d'utilisateur comprenant en outre :

des moyens (70, 72, 74, 78, 100, 102, 108, 110) permettant de recevoir et identifier les signaux de synchronisation secondaires choisis transmis ; et

des moyens (80) permettant de déterminer le groupe de code attribué de la station de base et la tranche de temps choisie en fonction des signaux de synchronisation secondaires choisis identifiés.

12. Système selon la revendication 11, **caractérisé en outre en ce que** les moyens de réception et d'identification (70, 72, 74, 78, 100, 102, 108. 110) comprennent une pluralité de filtres (78) correspondant, au moins un filtre correspondant (78) étant adapté à chaque signal secondaire de synchronisation de l'ensemble de signaux secondaires de synchronisation.

13. Système selon la revendication 12, **caractérisé en outre en ce que** les signaux secondaires sont transmis soit sur une porteuse en phase soit sur une porteuse en quadrature de phase et **en ce que** la pluralité de filtres correspondants à un filtre correspondant (100, 102, 108, 110) en phase et en quadrature de phase pour chaque signal secondaire de l'ensemble de signaux secondaires.

14. Système selon la revendication 11, **caractérisé en outre en ce que** les moyens d'association (68) associent une tranche de temps choisie dans les trames à la combinaison unique de signaux secondaires.

15. Système selon la revendication 11, **caractérisé en outre en ce que** la station (30) de base est l'une de la pluralité de stations de base (30), chaque station de base (30) transmettant un signal de synchronisation de code primaire et **en ce que** l'équipement d'utilisateur (32) comprend en outre un moyen (80) permettant d'accumuler des correspondances d'éléments sur un nombre défini de trames pour déterminer avec quelle station de base de la pluralité de stations de base communiquer.

16. Système selon la revendication 15, **caractérisé en outre en ce que** le nombre défini de trames est égal à quarante.

17. Système selon la revendication 11, **caractérisé en outre en ce que** les signaux secondaires de synchronisation transmis sont transmis de façon sélective au moyen d'une porteuse en phase ou en quadrature de phase.

18. Système selon la revendication 11, **caractérisé en outre en ce que** l'équipement d'utilisateur (32) comprend en outre des moyens (80) permettant de mettre en corrélation le signal de synchronisation de code primaire avec les signaux secondaires de synchronisation transmis pour obtenir une référence de phase.

19. Système selon la revendication 18, **caractérisé en outre en ce que** le signal de synchronisation de code primaire n'est pas modulé avec des données.

20. Système selon la revendication 18, **caractérisé en outre en ce que** l'équipement d'utilisateur (32) comprend en outre des moyens permettant de redresser les signaux secondaires reçus sur la base de la référence de phase du signal de synchronisation de code primaire.

21. Système selon la revendication 20, **caractérisé en outre en ce que** l'équipement d'utilisateur comprend en outre des moyens (78, 100, 102, 108, 110) permettant un filtrage correspondant les signaux secondaires reçus et des moyens (80) permettant d'accumuler les résultats du filtrage correspondant sur un nombre défini de trames.

22. Ensemble de signaux de synchronisation pouvant être utilisé dans un système de communication en duplex, à répartition dans le temps et sans fil, le système de communication en duplex et à répartition dans le temps utilisant des tranches de temps dans des trames répétées pour communiquer,

les signaux de synchronisation choisis parmi ledit ensemble de signaux de synchronisation étant transmis depuis une station de base (30) pour être utilisés dans la synchronisation d'un équipement d'utilisateur (32), la station de base (30) étant associée avec un groupe de codes attribué parmi un nombre N prédéterminé de groupes de codes possibles et une tranche de temps choisie parmi une pluralité de tranches de temps d'une voie de synchronisation primaire, l'ensemble de signaux de synchronisation étant **caractérisé en ce que** :

l'ensemble de signaux de synchronisation, qui ne dépasse pas $(\log_2 N) + 1$ en nombre, identifie le groupe de codes attribué et la tranche de temps choisie.

23. Ensemble de signaux de synchronisation selon la revendication 22, **caractérisé en outre en ce que** l'ensemble de signaux de synchronisation a des bits binaires produits par la combinaison d'un identifiant de groupe de code binaire avec une ligne choisie d'une matrice de Hadamard.

24. Ensemble de signaux de synchronisation selon la revendication 23, **caractérisé en outre en ce que** la ligne choisie est choisie dans un ensemble de lignes pouvant être potentiellement choisies ; les lignes pouvant être potentiellement choisies comprenant les lignes 24, 40, 56, 104, 120 et 136.

25. Ensemble de signaux de synchronisation selon la revendication 22, **caractérisé en outre en ce qu'**il est transmis selon un décalage temporel prédéterminé à partir d'une limite initiale d'une tranche de temps.

26. Ensemble de signaux de synchronisation selon la revendication 22, **caractérisé en outre en ce que** chaque signal de synchronisation de l'ensemble est transmis de façon sélective au moyen d'une porteuse en phase ou en quadrature de phase.

FIG. 1

EP 1 188 260 B1

FIG. 2

FIG. 4

```
                                                           46
┌─────────────────────────────────┐
│      TRANSMIT THE PSC SIGNAL IN  │
│      AN ASSIGNED TIME SLOT FROM  │
│         THE BASE STATION         │
└─────────────────────────────────┘
                                                           48
┌─────────────────────────────────┐
│      TRANSMIT THE SSC SIGNALS TO │
│      THE UES INDICATING THE CODE │
│      GROUP ASSIGNED TO THE BASE  │
│      STATION AND THE TIME SLOT THAT │
│      THE PSC SIGNAL WAS TRANSMITTED │
└─────────────────────────────────┘
                                                           50
┌─────────────────────────────────┐
│    RECEIVE THE SSC SIGNALS AT THE UE │
└─────────────────────────────────┘
                                                           52
┌─────────────────────────────────┐
│    IDENTIFY THAT BASE STATION'S CODE │
│    GROUP AND THE PSC SIGNAL'S TIME SLOT │
└─────────────────────────────────┘
```

FIG. 3

```
                                                           54
┌─────────────────────────────────┐
│       DETERMINE THE POSSIBLE     │
│    COMBINATIONS OF CODE GROUPS   │
│       AND ASSIGNED TIME SLOTS    │
└─────────────────────────────────┘
                                                           56
┌─────────────────────────────────┐
│    DETERMINE THE NUMBER OF SSCS TO │
│    ALLOCATE BASED ON THE LOG BASE │
│    TWO OF THE MAXIMUM NUMBER OF  │
│        POSSIBLE COMBINATIONS     │
└─────────────────────────────────┘
```

FIG. 6

**FIG. 5**

FIG. 7

FIG. 8

PSC SPREAD SPECTRUM SIGNAL GENERATOR — 66

$SSC_{11}$ SPREAD SPECTRUM SIGNAL GENERATOR — $104_{11}$

SW — $106_{11}$

$SSC_{12}$ SPREAD SPECTRUM SIGNAL GENERATOR — $104_{12}$

SW — $106_{12}$

$SSC_{1M}$ SPREAD SPECTRUM SIGNAL GENERATOR — $104_{1M}$

SW — $106_{1M}$

$SSC_{21}$ SPREAD SPECTRUM SIGNAL GENERATOR — $104_{21}$

SW

$SSC_{22}$ SPREAD SPECTRUM SIGNAL GENERATOR

$104_{22}$ ⋮ $104_{2M}$ — $106_{21}$

$106_{22}$

$SSC_{2M}$ SPREAD SPECTRUM SIGNAL GENERATOR — $106_{2M}$

SW

86

Σ

Σ

88

82

COSωt

90°

98

84

$30_1$

58

60

70

72

$32_1$

92

COSωt

90°

96

94

76 — PSC MF

$108_{11}$ — $SSC_{11}$ MF

$108_{12}$ — $SSC_{12}$ MF

$108_{21}$ ⋮ $108_{1M}$

$SSC_{1M}$ MF

$SSC_{21}$ MF

$SSC_{22}$ MF

$108_{22}$ ⋮ $108_{2M}$

$SSC_{2M}$ MF

$110_{11}$

$SSC_{11}$ MF

$SSC_{12}$ MF

$110_{12}$ ⋮ $110_{1M}$

$SSC_{1M}$ MF

$SSC_{21}$ MF

$SSC_{22}$ MF

$110_{21}$

$110_{22}$ ⋮ $110_{2M}$

$SSC_{2M}$ MF

80

PROCESSOR

EP 1 188 260 B1

FIG. 9

AWGN CHANNEL, 8 SLOTS

FIG. 10

SINGLE PATH RAYLEIGH, 6 kHz FREQ. OFFSET, 4 SLOTS

SINGLE PATH RAYLEIGH, 6 kHz FREQ. OFFSET, 8 SLOTS

FIG. 11

ITU CHANNEL w/ 3 MPs, 100km/h, 8 SLOTS

FIG. 12

ITU CHANNEL w/ 3 MULTIPATHS, 500 km/h, 6 kHz FREQ. OFFSET, 8 SLOTS

FIG. 13

SINGLE PATH RAYLEIGH, 10 kHz FREQ. OFFSET, 8 SLOTS

FIG. 14

ITU CHANNEL w/ 3 MULTIPATHS, 500 km/h, 10 kHz FREQ. OFFSET, 8 SLOTS

FIG. 15

FIG. 16

FIG. 17